# DEMANDE DE BREVET EUROPEEN

(11) **EP 4 799 840 A1**
(43) Date de publication de la demande: **02.09.2026**
(21) Numéro de dépôt: 26159521.9
(22) Date de dépôt: 19.02.2026
(51) Int. Cl.: B60K 1/04, B60K 1/00, B62D 25/20, B60L 50/64, B60L 50/60

(54) **AGENCEMENT DE BAS DE CAISSE DE VÉHICULE AUTOMOBILE MUNI D'UNE ISOLATION ENTRE UN HABILLAGE DE BATTERIE ET UN BAVOLET**

(30) Priorité: 28.02.2025 FR 2502027
(71) Demandeur: AMPERE s.a.s., 92100 Boulougne-Billancourt (FR)
(72) Inventeur: BRIARD, Guillaume, 78280 GUYANCOURT (FR); LEMOINE, Sébastien, 78280 GUYANCOURT (FR)
(74) Mandataire: Renault Group

(57) **Abrégé**

Agencement (1) de bas de caisse de véhicule automobile comprenant un plancher (2), au moins une batterie (4) fixée à un bavolet (5), l'agencement comprend un espace entre le plancher (2), la batterie (4) et le bavolet (5) muni d'un élément de remplissage (3) s'étendant au contact du plancher (2), de la batterie (4), du bavolet (5).

## Description

### Domaine technique

L'invention a pour domaine technique un agencement de bas de caisse de véhicule automobile, et plus particulièrement un tel agencement comprenant une isolation thermique et acoustique entre une batterie et un bavolet.

### Techniques antérieures

Un véhicule automobile comprend un châssis formé par au moins deux poutres longitudinales liées ensemble par au moins deux poutres transversales. Le châssis supporte le plancher ainsi que les différents organes mécaniques du véhicule.

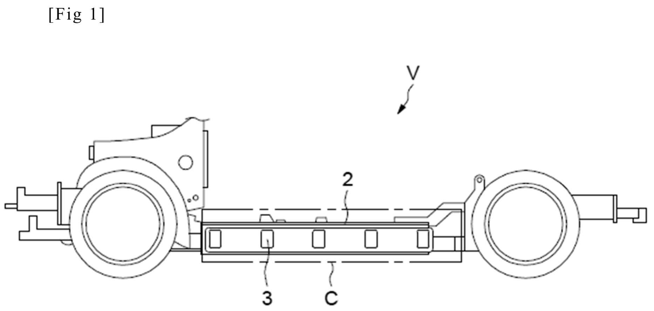

Dans le cas spécifique d'un véhicule automobile électrique ou hybride, une batterie dite batterie de traction est disposée dans le châssis en position centrale, sous le plancher d'habitacle. La figure 1 est une vue latérale d'un véhicule automobile 1 illustrant un tel placement de la batterie de traction dans la zone du châssis (référencée C) sous le plancher d'habitacle.

Le châssis est ensuite habillé latéralement par des bavolets, qui sont des profilés ayant à la fois des fonctions structurelles et d'embellissement. Ces bavolets sont essentiellement disposés en regard de la zone d'habitacle et s'étendent de l'aile avant à l'aile arrière de chaque côté du véhicule.

La batterie de traction est fixée sur une plaque de support, qui est fixée à son tour aux poutres du châssis et aux bavolets.

Du fait de la conception du châssis et de la batterie, un espace est présent entre chaque bavolet et la batterie.

Ces espaces peuvent être laissés vides ou utilisés pour faire transiter des servitudes comme par exemple des conduites de refroidissement ou de frein.

Malgré cela, une grande partie de ces espaces libres est inoccupée, et du fait de cette zone vide entre la batterie et les bavolets, il apparait des ponts thermiques entre l'air ambiant et le véhicule ainsi que des nuisances acoustiques.

Il existe un besoin d'isolation thermique et acoustique de ces espaces libres entre la batterie et le bavolet adjacent.

Il existe également un besoin de couplage de l'isolation thermique et acoustique de ces espaces libres entre la batterie et le bavolet adjacent, avec, éventuellement, le maintien de conduites disposées dans ces espaces libres.

De l'état de la technique, on connait le document EP2881644 décrivant un dispositif de montage ou de fixation d'installations, notamment de conduites, nécessitant une isolation thermique et/ou acoustique.

Néanmoins, ce document ne mentionne pas le cas particulier d'un véhicule automobile, ni le cas très particulier de l'isolation de la zone entre la batterie et le bavolet adjacent. De plus, il n'apparait pas de façon évidente comment le dispositif divulgué dans ce document pourrait être adapté à la résolution du problème technique mentionné ci-dessus.

L'état de la technique ne résout donc pas le problème technique identifié.

### Exposé de l'invention

L'invention a pour objet un agencement de bas de caisse de véhicule automobile comprenant un plancher, au moins un habillage de batterie fixé à un bavolet. L'agencement comprend un espace entre le plancher, la batterie et le bavolet muni d'un élément de remplissage.

L'agencement peut comprendre au moins une conduite disposée dans l'espace libre, l'agencement comprenant alors des moyens de fixation conçus de sorte à solidariser ladite au moins une conduite à la batterie.

Ladite au moins une conduite peut être fixée via un dispositif de maintien, lui-même étant solidarisé à la batterie par un moyen de fixation, l'élément de remplissage s'étendant autour du dispositif de maintien et du moyen de fixation.

La au moins une conduite peut être disposée dans l'élément de remplissage, l'élément de remplissage étant solidarisé à la batterie par un moyen de fixation.

Le moyen de fixation peut comprendre un insert solidaire de l'élément de remplissage, et un élément complémentaire solidaire de la batterie.

Le moyen de fixation peut comprendre un élément adhésif apposé à l'interface entre la batterie et l'élément de remplissage.

L'élément de remplissage peut être une mousse ou un élément compressible

Lorsque l'élément de remplissage est compressible, notamment du type d'une mousse expansive, il peut être muni d'une découpe pour l'insertion en force de chaque conduite.

La conduite peut être une conduite de refroidissement.

Un autre objet de l'invention est un véhicule automobile comprenant un agencement de bas de caisse tel que décrit ci-dessus.

### Brève description des dessins

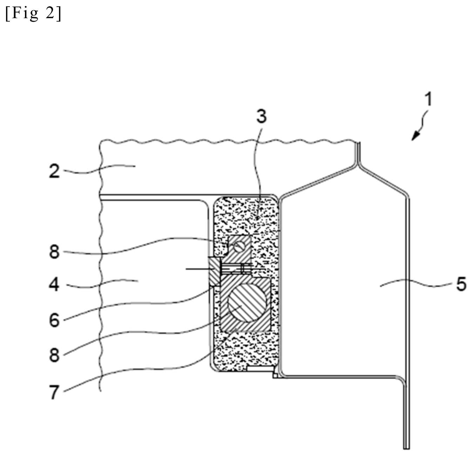

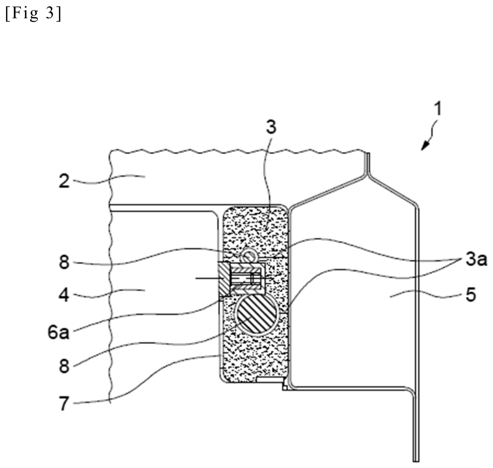

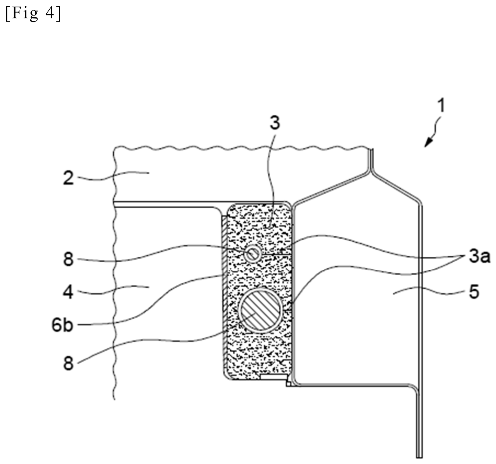

D'autres buts, caractéristiques et avantages de l'invention apparaîtront à la lecture de la description suivante, donnée uniquement à titre d'exemple non limitatif et faite en référence aux dessins annexés sur lesquels :
- la figure [Fig 1] est une vue latérale d'un véhicule automobile comprenant une batterie de traction,
- la figure [Fig 2] illustre un premier mode de réalisation d'un agencement 1 de bas de caisse compris selon l'invention,
- la figure [Fig 3] illustre un deuxième mode de réalisation d'un agencement 1 de bas de caisse c selon l'invention, et
- la figure [Fig 4] illustre un troisième mode de réalisation d'un agencement 1 de bas de selon l'invention.

### Description détaillée

Un bas de caisse de véhicule comprend un plancher 2, une batterie 4, un bavolet 5 ainsi que des conduites 8. La batterie est fixée sur le bavolet 5 par l'intermédiaire de moyens de fixation 9a.

Un espace vide est alors réservé entre la batterie 4 et le bavolet 5. Dans un mode de réalisation particulier, cet espace vide peut accommoder au moins une conduite 8.

Afin d'assurer le maintien des conduites 8 et afin d'assurer l'isolation thermique et acoustique de l'espace vide, un agencement 1 de bas de caisse spécifique est proposé.

Les figures 2 à 5 illustrent différents modes de réalisation de l'agencement 1 de bas de caisse selon l'invention. Ces différents modes de réalisation comprennent un plancher 2, une batterie 4, un bavolet 5 ainsi qu'au moins une conduite 8, et des moyens de fixation 9a de la batterie 4au bavolet 5.

Un premier mode de réalisation de l'agencement 1 de bas de caisse, illustré par la figure 2 comprend en outre un dispositif de maintien 7, dans laquelle est insérée la au moins une conduite 8. Le dispositif de maintien7 est ensuite fixé à la batterie 4 par l'intermédiaire d'un moyen de fixation 6.

L'agencement 1 de bas de caisse comprend par ailleurs un élément de remplissage 3 remplissant la zone vide entre la batterie 4 et le bavolet 5. Cet élément de remplissage 3 assure l'isolation thermique et acoustique.

Un deuxième mode de réalisation de l'agencement 1 de bas de caisse, illustré par la figure 3 comprend au moins une découpe 3a ménagée dans l'élément de remplissage 3, associée à chaque conduite 8 et permettant une insertion en force de ladite conduite 8 dans l'élément de remplissage 3. Du fait de son caractère compressible, chaque découpe 3a reprend sa forme initiale après insertion de la conduite 8 correspondante. Une telle insertion en force de la au moins une conduite 8 permet de s'affranchir d'utiliser un dispositif de maintien 7 et des moyens de fixation 6 tels que décrits dans le premier mode de réalisation.

L'agencement 1 de bas de caisse comprend par contre des moyens de fixation 6a de l'élément de remplissage 3 sur la batterie 4.

Un troisième mode de réalisation de l'agencement 1 de bas de caisse, illustré par la figure 4 diffère du deuxième mode de réalisation de par l'utilisation de moyens de fixation 6b de l'élément de remplissage 3 sur la batterie 4 sous la forme d'une couche adhésive. Ces moyens de fixation 6b permettent une mise en œuvre plus aisée de l'agencement 1 de bas de caisse.

Dans chacun des modes de réalisation, l'élément de remplissage 3 peut être une mousse.

## Revendications

1. Agencement (1) de bas de caisse de véhicule automobile comprenant un plancher (2), au moins une batterie (4) fixé à un bavolet (5), **caractérisé par le fait que** l'agencement comprend un espace entre le plancher (2), la batterie (4) et le bavolet (5) muni d'un élément de remplissage (3).

2. Agencement (1) selon la revendication 1, dans lequel au moins une conduite (8) est disposée dans l'espace libre, l'agencement (1) comprenant alors des moyens de fixation (6,6a,6b) conçus de sorte à solidariser ladite au moins une conduite (8) à la batterie (4).

3. Agencement (1) selon la revendication 2, dans lequel la au moins une conduite (8) est fixée à un dispositif de maintien (7), le dispositif de maintien (7) étant solidarisé à la batterie (4) par un moyen de fixation (6), l'élément de remplissage (3) s'étendant autour du dispositif de maintien (7) et du moyen de fixation (6).

4. Agencement (1) selon la revendication 2, dans lequel la au moins une conduite (8) est disposée dans l'élément de remplissage (3), l'élément de remplissage (3) étant solidarisé à la batterie (4) par un moyen de fixation (6a,6b).

5. Agencement (1) selon la revendication 4, dans lequel le moyen de fixation (6a) comprend un insert solidaire de l'élément de remplissage 3, et un élément complémentaire solidaire de la batterie 4.

6. Agencement (1) selon la revendication 4, dans lequel le moyen de fixation (6b) comprend un élément adhésif apposé à l'interface entre la batterie (4) et l'élément de remplissage (3).

7. Agencement (1) selon l'une quelconque des revendications 1 à 6, dans lequel l'élément de remplissage (3) est une mousse.

8. Agencement (1) selon la revendication 6, dans lequel, lorsque l'élément de remplissage (3) est compressible, notamment du type d'une mousse expansive, l'élément de remplissage (3) comprend une découpe (3a) pour l'insertion en force de chaque conduite (8).

9. Agencement (1) selon l'une quelconque des revendications 1 à 8, dans lequel, la conduite (8) est une conduite d'un circuit de refroidissement.

10. Véhicule automobile comprenant un agencement de bas de caisse selon l'une quelconque des revendications 1 à 9.
